# EUROPÄISCHE PATENTSCHRIFT

(11) **EP 1 398 623 B1**
(45) Veröffentlichungstag und Bekanntmachung des Hinweises auf die Patenterteilung: **11.11.2009**
(21) Anmeldenummer: 03020733.6
(22) Anmeldetag: 12.09.2003
(51) Int. Cl.: G01N 23/202

(54) **Verfahren und Vorrichtung zur Polarisationsanalyse bei Streuexperimenten mit Neutronen**
Method and apparatus for polarisation analysis in neutron scattering experiments
Méthode et appareil d'analyse de polarisation dans des expériences de diffusion de neutrons

(30) Priorität: 16.09.2002 DE 10243074
(43) Veröffentlichungstag der Anmeldung: 17.03.2004
(73) Patentinhaber: Forschungszentrum Jülich GmbH, 52425 Jülich (DE)
(72) Erfinder: Ohl, Michael, Dr., 63477 Maintal (DE); Schmidt, Wolfgang, Dr., 38570 Goncelin (FR); Ruppert, Heiko, 63820 Elsenfeld (DE)

(56) Entgegenhaltungen:
- EP-A- 0 515 690
- PATENT ABSTRACTS OF JAPAN vol. 2000, no. 22, 9. März 2001 (2001-03-09) & JP 2001 144000 A (NIKON CORP), 25. Mai 2001 (2001-05-25)
- PATENT ABSTRACTS OF JAPAN vol. 016, no. 186 (P-1347), 7. Mai 1992 (1992-05-07) & JP 04 022899 A (NKK CORP), 27. Januar 1992 (1992-01-27)
- MOON R M ET AL: "Polarization analysis of thermal-neutron scattering" PHYSICAL REVIEW, MAY 1969, USA, Bd. 181, Nr. 2, Seiten 920-931, XP002266132 ISSN: 0031-899X
- PATENT ABSTRACTS OF JAPAN vol. 2000, no. 26, 1. Juli 2002 (2002-07-01) & JP 2001 264500 A (HITACHI LTD;HITACHI ENG CO LTD), 26. September 2001 (2001-09-26)

## Beschreibung

Die Erfindung betrifft ein Verfahren zur Polarisationsanalyse bei Streuexperimenten mit Neutronen sowie eine für die Durchführung des Verfahrens geeignete Vorrichtung.

Bei der Polarisationsanalyse werden Proben eines Stoffes mit Neutronen beschossen, welche einen Eigen-Drehimpuls (Spin) besitzen. Mit der Polarisationsanalyse können insbesondere die magnetischen Eigenschaften der Probe untersucht werden. Der polarisierte Neutronenstrahl durchläuft, nach dem Stand der Technik, in einem sogenannten Drei-Achsen-Spektrometer eine mit Vakuum beaufschlagte Röhre, welche vor der Probe endet, tritt durch eine Wegstrecke, welche einen Luftdruck mit im wesentlichen einem bar aufweist und gelangt in die Probe. In Abhängigkeit von den magnetischen Eigenschaften der Probe, wird der Neutronenspin aus seiner Polarisationsebene ausgelenkt. Die Neutronen werden dabei an der Probe gestreut und treten nach dem Streuprozeß in dem gesamten Winkelbereich auf. Erhöhte Neutronenintensität befindet sich in Winkelbereichen, die den nuklearen und magnetischen Reflexen entsprechen. Nach dem Streuprozeß durchlaufen die Neutronen wiederum eine Vakuumröhre und können anschließend von einem Detektor detektiert werden. Mit derartigen Meßanordnungen sind teilweise erhebliche Meßungenauigkeiten verbunden. Insbesondere bei Messungen bei kleinen Impulsübertragungen (q-Wert) sind besondere Ungenauigkeiten aufgetreten. In einem Winkelbereich von 2° bis 10° konnten daher in der Vergangenheit keine auswertbaren Ergebnisse erzielt werden.

Die Schrift JP 2001 144 4000 beschreibt eine Vorrichtung zum Durchlass von geladenen Partikelströmen, welche über Projektionslinsen verfügt.

Drei-Achsen-Spektrometer wurden in den Veröffentlichungen "Energy Distribution of Neutrons Scattered by Paramagnetic Substances" der Zeitschrift Physical Review Vol. 100 auf Seite 601 (B.N. Brockhouse) sowie "Scattering of Neutrons by Phonons in an Aluminium Single Crystal" von B.N. Brockhouse, A.T. Stewart in der Zeitschrift Physical Review Vol. 100, Seite 756 beschrieben.

Aus (G.P. Kopitsa, V.V. Runov, A.I.Okorokov, I.S. Lyubutin, K.V. Frolov, "Small-angle polarized neutron scattering in YBa₂(Cu_{0.9}Fe_{0.1})₃O_{7-y} ceramics at T=290-550 K"ist ein Gerät, in dem ein polarisierter Neutronenstrahl auf die Probe gerichtet und von der Probe abgelenkt wird, zur Polarisationsanalyse von Proben mittels Kleinwinkelstreuung bekannt. Dieses Gerät verfügt über einen Vakuumbehälter für die Aufnahme der Probe sowie über Mittel zur Erzeugung eines Magnetfelds im Probenraum.

Es ist daher die Aufgabe der Erfindung, ein Verfahren und eine Vorrichtung zu schaffen, welche eine größere Meßgenauigkeit insbesondere bei größeren Streuwinkeln aufweisen und bei denen auch Winkelbereiche zwischen 2° und 10° der Messung zugänglich sind.

Ausgehend vom Oberbegriff des Anspruchs 1 wird die Aufgabe erfindungsgemäß gelöst, mit den im kennzeichnenden Teil des Anspruchs 1 angegebenen Merkmalen.

Mit dem erfindungsgemäßen Verfahren und der Vorrichtung ist es nunmehr möglich, genauere Meßergebnisse zu erhalten sowie auch in einem Winkelbereich von 2° bis 10° auf Meßergebnisse Zugriff zu haben.

Vorteilhafte Weiterbildungen der Erfindung sind in den Unteransprüchen angegeben.

In den Zeichnungen sind Einzelheiten der erfindungsgemäßen Vorrichtungen dargestellt.

Es zeigt:
- Fig.1:: Querschnitt durch einen Vakuumbehälter mit Adapterringen.
- Fig.2:: Querschnitt durch einen Vakuumbehälter mit einem Spulenpaar zur Erzeugung eines Magnetfeldes B₀ und Spulen zur Erzeugung eines lokalen Magnetfeldes B₁
- Fig.3:: Eine Ausführungsformn mit einem äußeren Spulenpaar zur Erzeugung eines Magnetfeldes B₀ und einer inneren Spulenanordnung, die ein weiteres Spulenpaar zur Erzeugung eines inneren Magnetfeldes B₀' und drei Spulen zur Erzeugung eines inneren lokalen Magnetfeldes B₁ umfaßt.
- Fig.4:: Eine Ausführungsform mit einem äußeren Spulenpaar zur Erzeugung eines Magnetfeldes B₀ und drei inneren Spulenführungen zur Erzeugung eines lokalen Magnetfeldes B₁.
- Fig.5:: Eine Ausführungsform mit einem äußeren Spulenpaar für die Erzeugung des homogenen Magnetfeldes B₀ und drei weitere äußere Spulenpaare, welche der Erzeugung eines lokalen Magnetfeldes B₁ am Probenort dienen.
- Fig.6:: Querschnitt durch eine Spulenwicklung mit Kühlkanälen.

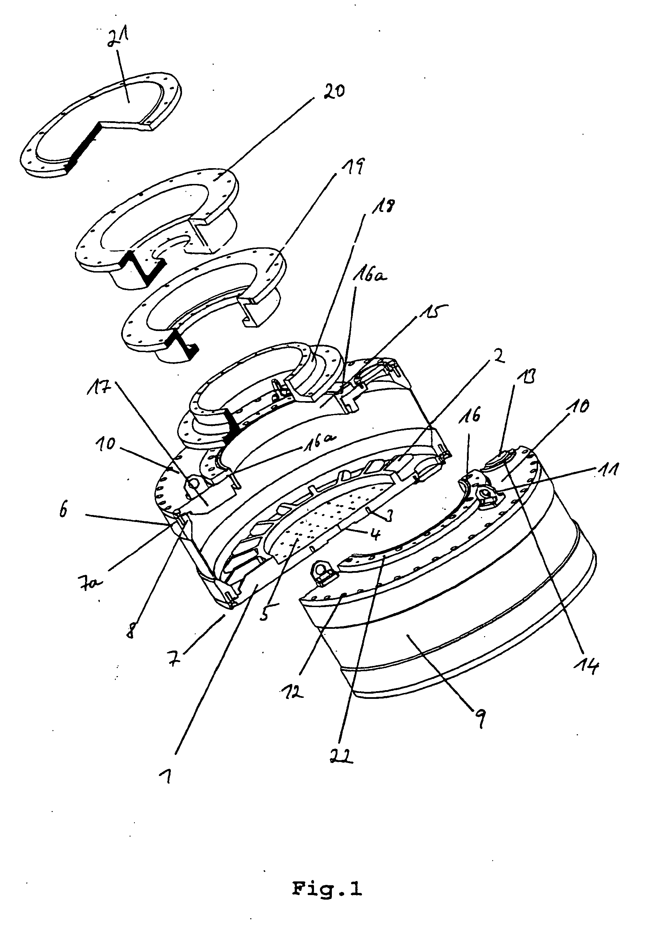

In Figur 1 ist ein Querschnitt durch einen Vakuumbehälter mit Adapterringen abgebildet. In ihr ist der Boden 1 mit Vertiefungsrippen 2, einer Gewindebohrung 3 zur Befestigung des Vakuumbehälters an der Halterung der Versuchsanordnung, einer Halterungszentrierung 4, und einem Gewindebohrungsraster 5 im Boden 1 zur Befestigung von Geräten im Vakuumbehälter ausgestattet. Der Boden 1 ist mit dem Mantel 6 des Vakuumbehälters über Verschraubungen 7 verbunden. Der Mantel 6 verfügt über Dichtungsnuten 8 zur Aufnahme eines O-Rings. Der Mantel 6 verfügt über einen für Neutronen durchlässigen Bereich 9, der als Neutronenfenster bezeichnet werden kann. Der Deckel 10 des Vakuumbehälters besitzt Transportlaschen 11 sowie Verschraubungen 12 des Deckel 10 mit dem Mantel 6. Auf dem Deckel 10 befinden sich Anschlußöffnungen 13 für elektrische, fluide und optische Unterstützungselemente, die über Verschraubungen 14 an dem Deckel 10 angebracht sind. In dem Deckel 10 befindet sich ein Einsatzring 15 für weitere Adapterringe, der Dichtungsnuten 16, 16a zur Aufnahme eines O-Rings besitzt. Der Deckel 10 besitzt weiterhin Versteifungsrippen 17. Als Adapterringe sind in Figur 1 beispielhaft ein Adapterring für einen Ofen 18, ein Adapterring für einen Kryostat 19 und ein Adapterring für einen geschlossenen Kühlkreislauf 20 dargestellt. Als Abschlußelement dient ein Verschlußdeckel 21. Der Einsatzring 15 für die Adapterringe weist Gewindebohrungen 22 für Stehbolzen sowie Verschraubungen 7a zum Verbinden des Einsatzringes 15 und dem Deckel 10 auf.

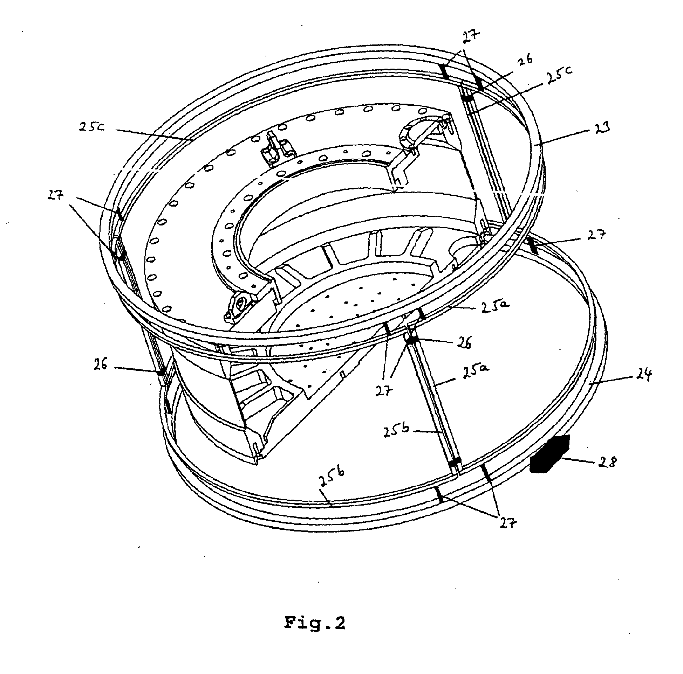

Figur 2 zeigt einen Querschnitt durch einen Vakuumbehälter mit einem Spulenpaar zur Erzeugung eines homogenen Magnetfeldes B₀ und Spulen zur Erzeugung eines lokalen Magnetfeldes B₁. Das Spulenpaar zur Erzeugung eines homogenen Magnetfeldes B₀ umfaßt eine obere äußere Führungsspule 23 und eine untere äußere Führungsspule 24. Die Spulen zur Erzeugung eines lokalen Magnetfeldes B₁ tragen die Bezugszeichen 25a, 25b, und 25c und sind über Befestigungsmittel 26 miteinander verbunden. Das Spulenpaar zur Erzeugung eines Magnetfeldes B₀ und die Spulen zur Erzeugung eines lokalen Magnetfeldes B₁ sind durch Befestigungsmittel 27 miteinander verbunden. Das Vorrichtungselement mit dem Bezugszeichen 28 ist eine Anschlußvorrichtung, die für eine elektrische, optische und/oder fluide Unterstützung geeignet ist.

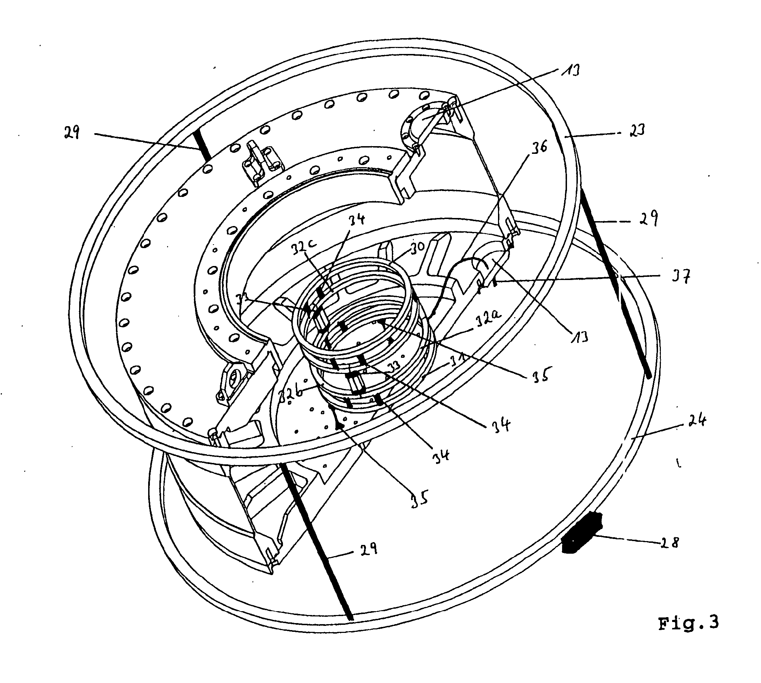

In Figur 3 haben die selben Vorrichtungsbestandteile gleichen Bezugszeichen, wie in den vorhergehenden Figuren. In ihr wird ein Vakuumbehälter von einer oberen äußeren Spule 23 und einer unteren äußeren Spule 24 umschlossen, welche durch Haltearme 29 zueinander fixiert sind. Im Inneren des Vakuumbehälters befinden sich eine obere innere Führungsspule 30 und eine untere innere Führungsspule 31 für die Erzeugung eines homogenen Magnetfeldes B₀', die drei Fensterspulen 32a,32b,32c für die Erzeugung eines lokalen Magnetfeldes B₁' am Probenort einschließen. Die drei Fensterspulen 32a,32b,32c sind durch Befestigungsmittel 33 miteinander verbunden. Die obere innere Führungsspule 30 und die untere innere Führungsspule 31 sind mit den drei Fensterspulen 32a, 32b, 32c über Halterungen 34 miteinander verbunden. Die Spulenanordnung ist über ein Gestell 35 auf dem Boden 1 des Vakuumbehälters befestigt. Die Spulen sind über eine Anschlußleitung 36 für elektrische, optische und/oder fluide Unterstützung angeschlossen, die in einen Anschluß 37 für elektrische, optische und/oder fluide Unterstützung mündet, der im Anschlußdeckel 13 integriert ist.

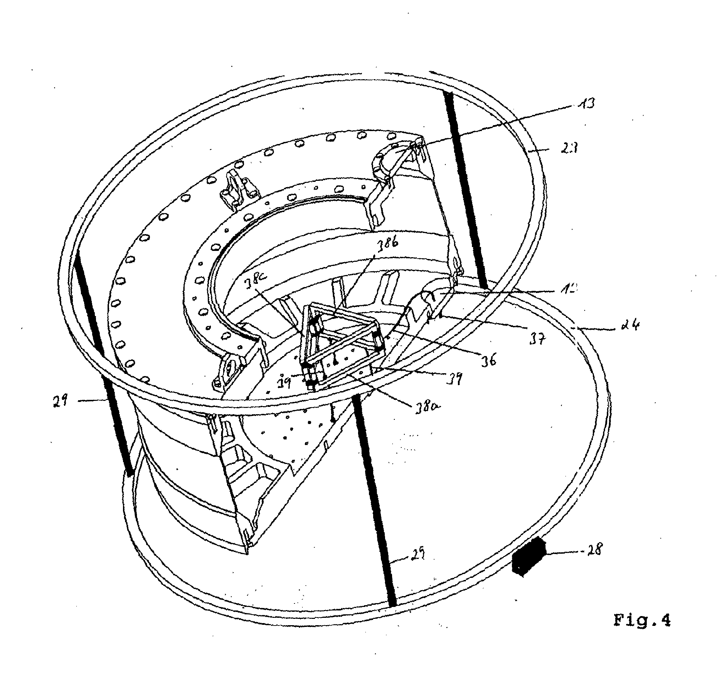

In Figur 4 sind den Vorrichtungsmerkmalen die selben Bezugszeichen zugeordnet wie in den vorhergehenden Figuren. Sie umfaßt eine andere Ausführungsform von Spulen zur Erzeugung eines lokalen Magnetfeldes B₁' am Probenort, in Form der drei Fensterspulen 38a, 38b, 38c im Inneren des Vakuumbehälters, welche auf Haltegestellen 39 befestigt sind, die am Boden 1 des Vakuumbehälters montiert sind.

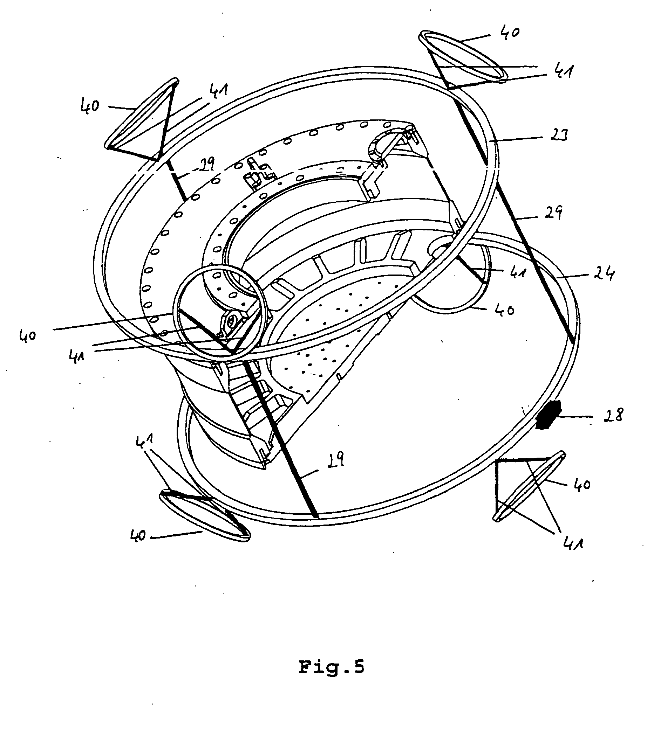

In Figur 5 sind den Vorrichtungsmerkmalen die selben Bezugszeichen zugeordnet wie in den vorhergehenden Figuren. In ihr bezeichnen die Bezugszeichen 40 Spulen, welche ein lokales Magnetfeld am Probenort B₁ erzeugen und die über Haltevorrichtungen 41 an den Spulen 23 und 24 befestigt sind.

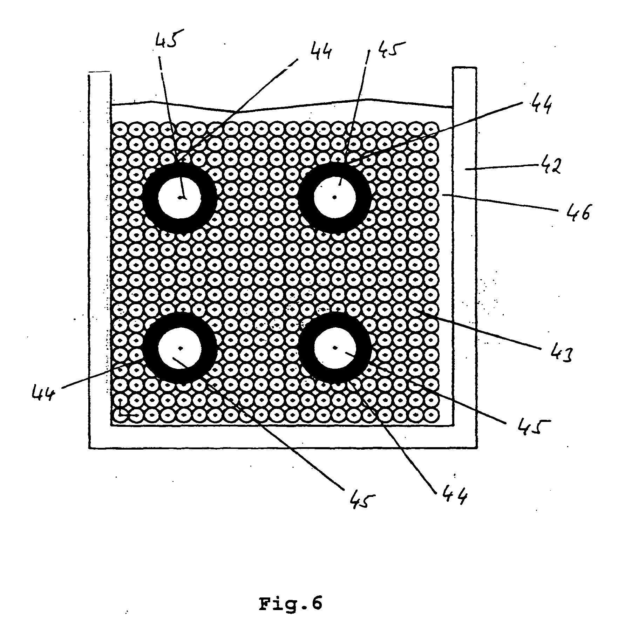

In Figur 6 ist ein Querschnitt durch einen Spulenkörper dargestellt. In ihr umgibt der Spulenrahmen 42 die Wicklung des Spulendrahtes 43, in den Rohrleitungen 44 für Kühlmittel 45 eingelassen sind. Die Wicklungen des Spulendrahtes 43 sind zusammen mit den Rohrleitungen 44 für Kühlmittel 45 in ein Fixierharz 46 eingegossen, welches zur Stabilisierung der Spulendrähte 43 und der optimalen Wärmeübertragung dient.

Bei dem erfindungsgemäßen Verfahren wird die Probe in einem Dreiachsenspektrometer positioniert. Dieses Dreiachsenspektrometer verfügt über einen Vakuumbehälter, welcher vorzugsweise zylindrisch ausgebildet ist und über einen Deckel 10 sowie einen Boden 1 verfügt. Vorzugsweise sind der Deckel 10, der Boden 1 oder der Deckel 10 und der Boden 1 abnehmbar montiert. Der Vakuumbehälter ist an eine Pumpe angeschlossen, welche vorzugsweise über eine Anschlußöffnung 13 am Deckel 10 angeflanscht ist. Die baulichen Merkmale des Vakuumbehälters sind derart ausgestaltet, daß ein Vakuum von mindestens 10³ Pa (10⁻² bar), besser mindestens 10² Pa (10⁻³ bar) aufrecht erhalten werden kann. Der Druckbereich ist grundsätzlich nicht nach unteren Werten beschränkt, reicht jedoch aus praktischen Gründen vorzugsweise bis 10⁻² Pa (10⁻⁷ bar). Der erfindungsgemäße Vakuumbehälter hat vorzugsweise einen Durchmesser von 50 cm - 150 cm und eine Höhe von 35 cm - 40 cm, ist jedoch nicht auf diese Maße beschränkt. Idealerweise hat der Vakuumbehälter einen Durchmesser von 80-100 cm. Bei diesen Abmessungen wird die Luftströmung in erheblichem Maße verringert, so daß die Ergebnisse mit hoher Genauigkeit erzielt werden können. Mit dem Vakuumbehälter wird um den Probenort ein Vakuum einer Größe von mindestens 10³ Pa (10⁻² bar), vorzugsweise 10² Pa (10⁻³ bar), erzeugt. Die zu untersuchende Probe wird vorzugsweise mittig positioniert. Der als zylindrisches Bauteil ausgebildete Mantel 6 des Vakuumbehälters besitzt erfindungsgemäß einen für Neutronen durchlässigen Bereich 9, welcher entlang der Rotationsachse einen Winkelbereich von vorzugsweise 360° umfasst. Der für Neutronen durchlässige Bereich ist erfindungsgemäß zwischen 25 cm und 75 cm vom Probenort entfernt angeordnet, so dass der Neutronenstrahl auf dem Weg zur Probe eine Strecke zwischen 25 cm und 75 cm im Vakuum durchläuft. Vorzugsweise ist der Vakuumbehälter wenigstens teilweise aus amagnetischem Material gefertigt. Besonders bevorzugt besteht der gesamte Vakuumbehälter aus amagnetischem Material. Hierfür kommt beispielsweise Aluminium, besonders bevorzugt AlMg4.5 in Frage. Bei Verwendung derartiger Materialien wird ein Idealverhältnis zwischen statischer Stabilität des Vakuumbehälters und der Neutronendurchlässigkeit und damit einer niedrigen Dicke des Neutronenfensters 9 bewirkt. Der sich vorzugsweise über den gesamten Umfang des Zylinders erstreckende Durchgangsbereich für Neutronen 9, welcher vorzugsweise aus amagnetischem Material besteht, weist vorzugsweise eine maximale Dicke von 4 mm auf, besonders bevorzugt sind 3 mm Schichtdicke. Bei diesen Materialstärken liegt eine Statik vor, die einen Aufbau von Peripheriegeräten, wie beispielsweise Kryostaten, Ofen, Druckzelle, Magnet auf den Vakuumbehälter ermöglicht. Die Vakuumröhren des Drei-Achsen-Spektrometers können so weit an den Vakuumbehälter heran geführt werden, daß die Wegstrecke, in denen die Neutronen die atmosphärische Luft durchlaufen, auf ein Minimum reduziert wird. Nach Durchtritt des polarisierten Neutronenstrahls durch den für Neutronen durchlässigen Bereich 9 verfolgen die polarisierten Neutronen innerhalb des Vakuumbehälters störungsfrei ihre Wegstrecke von erfindungsgemäß 25 cm bis 75 cm und treffen dort auf die Probe. Im Vergleich zu den konventionellen Drei-Achsen-Spektrometern hat dies die Folge, dass bei gleicher Neutronenemission eine größere Menge an Neutronen die Probe erreicht, durch die verminderte Luftstreuung vor dem Eintreffen bei der Probe.

Das Dreiachsenspektrometer umfaßt Mittel zur Erzeugung eines im wesentlichen homogenen Magnetfeldes B₀, B_{0'}. B₀ wird für Mittel zur Erzeugung eines homogenen Magnetfeldes eingesetzt, welche sich außerhalb des Vakuumbehälters befinden. B₀' wird für die Mittel zur Erzeugung eines homogenen Magnetfeldes eingesetzt, welche sich erfindungsgemäß im Inneren des Vakuumbehälters befinden.

Vorzugsweise umfaßt das Dreiachsenspektrometer ein Spulenpaar 23,24, welches das homogene Magnetfeld B₀ im Inneren des Vakuumbehälters erzeugt. In einer besonders bevorzugten Ausführungsform befinden sich die Spulen 23,24 etwas oberhalb des Deckels 10 bzw. etwas unterhalb des Bodens 1 des Vakuumbehälters, wobei deren Symmetrieachse deckungsgleich mit der Drehachse des Vakuumbehälters ist. Dadurch kann der Vakuumbehälter gekippt werden, währenddessen die Spule unberührt bleibt und in der gleichen Position verbleiben kann. Durch das Spulenpaar 23,24 wird ein homogenes Magnetfeld im Innenraum des Vakuumbehälters erzeugt, das beispielsweise in einer Größenordnung von >0 bis 10 milli Tesla (mT) liegen kann. Das somit innerhalb des Vakuumbehälters aufgebaute homogene Magnetfeld hat zur Folge, dass die durch den für Neutronen durchlässigen. Bereich 9 eintretenden polarisierten Neutronen die Ausrichtung ihres eigenen Drehimpulses insbesondere vor Aufprall auf die zu untersuchende Probe beibehalten. Hierdurch wird die Untersuchungsgenauigkeit weiterhin verbessert, dies ist notwendig für die anschließende Polarisationsanalyse.

In einer weiterhin bevorzugten Ausführungsform der Erfindung wird am Probenort durch Mittel zur Erzeugung eines im wesentlichen lokalen Magnetfeldes B₁, B₁' ein lokales Magnetfeld B₁,B₁' erzeugt, dessen Richtung im wesentlichen senkrecht zum homogenen Magnetfeld B₀, B₀' ist und welches der magnetischen Ausrichtung der sich in der Probe befindenden Spins dient, bzw. die Probe unter den Einfluß eines lokalen homogenen Magnetfeldes B₁,B₁' versetzt. Die Mittel zur Erzeugung eines lokalen Magnetfeldes, die sich außerhalb des Vakuumbehälters befinden, erzeugen das lokale Magnetfeld B₁. Die Mittel zur Erzeugung eines lokalen Magnetfeldes, die im Inneren des Vakuumbehälters eingesetzt werden, erzeugen das lokale Magnetfeld B₁'. Das lokale Magnetfeld hat eine magnetische Feldstärke von vorzugsweise 0 bis 10 mTesla.

Das Mittel zur Erzeugung des im wesentlichen homogenen Magnetfeldes B₁, B₁' am Probenort umfaßt wenigstens drei Spulen, welche Magnetfelder erzeugen, die am Probenort zu dem resultierenden Magnetfeld B₁,B₁' führen. Der am Probenort wirksame Vektor B₁, B₁' kann durch die räumliche Position der Spulen, die dieses Feld erzeugen, in Verbindung mit der an ihnen angelegten Stromstärke variiert werden. Von der Erfindung ist jede Anordnung von Spulen, die das Magnetfeld B₁, B₁' erzeugen in Verbindung mit den dazugehörigen Stromstärken, mit denen die Spulen betrieben werden umfaßt, welche das Magnetfeld am Probenort erzeugt. Vorzugsweise ist das Magnetfeld B₁, B₁' im wesentlichen senkrecht zu dem Magnetfeld B₀, B₀'. Dies hat den Vorteil, daß durch Stromänderung in den einzelnen Spulen eine beliebige Richtung und Betrag des durch Vektoraddition entstehenden Vektors eingestellt werden kann.

Zu diesem Zweck sind beispielsweise mindestens drei weitere Spulen 25a,b,c angebracht, welche beispielsweise um den für Neutronen durchlässigen Bereich 9 des Vakuumbehälters positioniert sind. Vorzugsweise sind die Spulen 25 a,b,c außerhalb des Vakuumbehälters entlang der vorzugsweise zylindrischen Außenwand 6, 9 angebracht. Sie stehen somit senkrecht zu den das homogene Magnetfeld erzeugenden Helmholtzspulen 23, 24, welche sich oberhalb und unterhalb des Vakuumbehälters befinden. Vorzugsweise unterteilen sie den zylindrischen Umfang des Vakuumbehälters umschließenden Spulen 25a,b,c den Umfang des Vakuumbehälters derart, daß ein sehr weiter Winkelbereich von beispielsweise 0° bis mindestens 120° frei von einem Durchtritt von einem Magnetfelderzeugenden Mittel oder Haltestrukturen ist. Dies hat den Vorteil, dass die einfallenden und die aufgrund der Streuung abgelenkten Neutronen, welche die Probe durchtreten, störungsfrei auf ihrem Weg von der Neutronenquelle zur Probe und von der Probe zum Analysator geleitet werden können, da keine stromführenden Kabel durchlaufen werden müssen. Die entsprechenden Stromstärken in den Spulen, welche das Magnetfeld B₁, B₁' am Probenort bewirken, müssen individuell so angepasst werden, dass der sich am Probenort einzustellende Gesamtmagnetfeldvektor den gewünschten Betrag und Richtung erreicht.

In einer alternativen Ausführungsform kann das lokale Magnetfeld B₁ am Probenort dadurch hergestellt werden, dass drei stromführende Spulenpaare, welche sich vorzugsweise jeweils gegenüberstehen und den Vakuumbehälter einschließen, so angeordnet sind, dass deren Symmetrieachsen drei orthogonale Vektoren aufspannen, welche im wesentlichen die Flächen eines Würfels vorzugsweise symmetrisch durchtreten.

Alle beispielhaft angeführten Ausführungsformen erzeugen ein lokales Magnetfeld, welches es ermöglicht der Probe ein lokales Magnetfeld aufzuerlegen, welches vorzugsweise senkrecht zu B₀, B₀' am Probenort steht und daher im wesentlichen in der Streuebene des Neutronenstrahls liegt. Das Mittel zur Erzeugung des Magnetfeldes B₁, B₁' ist jedoch nicht auf die angeführten Beispiele begrenzt. Vielmehr kann jede Anordnung von Spulen oder Spulenpaaren, welche geeignet sind, das Magnetfeld B₁B₁' zu erzeugen, eingesetzt werden. Der Gesamtmagnetfeldvektor B₁ kann durch die Anordnung der Spulen in Verbindung mit deren Stromstärken eingestellt werden. Die Magnetfeldstärke liegt vorzugsweise in ei nem Bereich von 0 bis 10 mT.

Erfindungsgemäß befindet sich innerhalb des Vakuumbehälters ein weiteres Spulenpaar, welches ein homogenes Magnetfeld B₀' im wesentlichen am Probenort erzeugt (Fig.3), das vorzugsweise in einem Bereich von 0 bis 10 mT liegt und das vorzugsweise im wesentlichen parallel zu dem von dem Helmholtzspulenpaar erzeugten Magnetfeld B₀ verläuft, die sich oberhalb und unterhalb des Vakuumbehälters befinden. Dies hat den Vorteil, daß mit relativ geringen Strömen eine hohe Magnetfeldstärke B₀' am Probenort erzeugt werden kann.
Weiterhin kann die das Magnetfeld B₁' erzeugende Spule bzw. das das Magnetfeld B₀' erzeugende Spulenpaar im Inneren des Vakuumbehälters ebenfalls mit weiteren Spulen ausgestattet sein, welche ähnlich der den Vakuumbehälter umgebenden Spulen sind, die das Magnetfeld B₁ erzeugen. Diese Spulen erzeugen einen Magnetfeldvektor, B₁', der im wesentlichen senkrecht zur Symmetrieachse der kleineren Spule zur Erzeugung eines Magnetfeldvektors B₀' innerhalb des Vakuumbehälters verläuft.

Für die Temperierung der sich innerhalb des Vakuumbehälters befindenden Spulen ist eine Kühlung, vorzugsweise eine Wasserkühlung vorgesehen. (Fig.4, Bez. 36,37) Eine solche Kühlung kann für alle Spulen eingesetzt werden.

Von der erfindungsgemäßen Vorrichtung sind alle Unterkombinationen von Ausführungsformen für die Spulen zur Erzeugung des homogenen und des lokalen Magnetfeldes umfaßt.

Alle ein Magnetfeld erzeugenden Spulen können durch eine Kühlung temperiert werden. Die Temperatur sollte dabei vorzugsweise auf einen Wert unterhalb 80°C geregelt werden. Grundsätzlich kann gesagt werden, daß es um so besser ist, je tiefere Temperaturen beim Betrieb der Spulen erreicht werden. Eine Kühlung ist auch mittels anderer Kühlmittel als Wasser, beispielsweise Flüssiggase, wie flüssiger Stickstoff, möglich.

Der Vakuumbehälter ist vorzugsweise baulich so ausgerichtet, dass er entlang seiner Längsachse mittig ein Gewicht von mindestens 350 Kg sowie an seinem Rand ein Gewicht von mindestens 100 Kg tragen kann. Zu diesem Zweck befinden sich am Deckel 10 und/oder im Boden 1 des Vakuumbehälters rippenförmige Verstärkungen 2, welche wenigstens den Außenbereich des Deckels 10 und/oder des Bodens 1 verstärken. Dies ist insbesondere dann von Vorteil, wenn eine für die Neutronenstreuung gängige Probenumgebung wie z. B. ein Kryostat, Magnet, Ofen oder eine Druckzelle an den Vakuumbehälter angebracht werden sollen.

Um die Neutronenpolarisationsanalyse optimal durchführen zu können, können sowohl der Vakuumbehälter, die sich über und unter dem Vakuumbehälter befindenden Spulen 23, 24, die Spulen zur Erzeugung eines lokalen Magnetfeldes B₁ am Probenort oder wenigstens eine Komponente davon gegeneinander verschwenkbar angeordnet sein. Der Neutronendurchgangsbereich 9 sollte dabei so bemessen sein, dass Verkippungen des Vakuumbehälters um einen azimutalen Winkel plus/minus 18° den Neutronendurchgang nicht behindern.

In einer bevorzugten Ausführungsform ist der Boden 1 und/oder der Deckel 10 des Vakuumbehälters leicht abnehmbar montiert. Dies ist insbesondere dann von Vorteil, wenn innerhalb des Vakuumbehälters weitere neutronenoptische Komponenten wie beispielsweise eine Blende, die vorzugsweise aus amagnetischem Material bestehen sollte, eingebracht werden sollen. Zu diesem Zweck können die in den Vakuumbehälter einzubringenden Komponenten am Boden 1 und/oder am Deckel 10 mit für die Befestigung vorgesehenen Mitteln 5 verbunden werden. Der Vakuumbehälter verfügt vorzugsweise an seinem Deckel 10 über auswechselbare Adapterringe 18,19,20, welche den Anbau einer Probenumgebung wie z. B. einen Ofen, einen Kryostaten und eine Druckzelle ermöglichen. Weiterhin sollen die Adapterringe 18,19,20 über Mittel verfügen, welche die Einstellung der Probenhöhe relativ zu der Höhe der Neutronen vornimmt. In einer weniger bevorzugten Ausführungsform sind der Deckel 10 und/oder der Boden 1 des Vakuumbehälters nicht abnehmbar. In diesem Fall kann ein anderer Zugang zum Innenraum des Vakuumbehälters bestehen, beispielsweise eine Tür. Weiterhin verfügt der Vakuumbehälter vorzugsweise über elektrische Anschlüsse 37, beispielsweise für die Ansteuerung einer Blende innerhalb des Vakuumbehälters. Zusätzlich können Anschlüsse 37 für eine Wasserkühlung vorhanden sein, welche eine Abkühlung der stromführenden, magnetisierenden Vorrichtungsteile bewirkt. Die elektrischen Anschlüsse und/oder die Kühlanschlüsse sind vorzugsweise vakuumsicher ausgebildet.

Der Vakuumbehälter und die Polarisationseinheit 23, 24, 25 a, b, c, 40 das heißt die stromführenden Spulen, sind vorzugsweise nicht miteinander verbunden, um einen Wärmeübergang von der stromführenden Polarisationseinheit auf den Tank auszuschließen.

Als stromführende Spulenpaare können alle Spulenpaare verwendet werden, die geeignet sind, die für die Neutronenstreuung relevanten Magnetfelder B₀, B₀',B₁, B₁' zu liefern, jedoch sind Helmholzspulenpaare besonders gut geeignet, da sie besonders homogene Magnetfelder erzeugen können.

## Patentansprüche

1. Dreiachsenspektrometer zur Polarisationsanalyse von Proben, in welchem. Dreiachsenspektrometer ein polarisierter Neutronenstrahl auf die Probe gerichtet und von der Probe abgelenkt wird, wobei das Dreiachsenspektrometer über einen Vakuumbehälter, der ein Vakuum von mindestens 10³ Pa (10⁻² bar) aufrechtzuerhalten vermag, für die Aufnahme einer Probe verfügt und dass es über Mittel zur Erzeugung eines im Wesentlichen homogenen Mag netfeldes verfügt, welches sich über den Probenraum erstreckt,
**dadurch gekennzeichnet, dass**
der Vakuumbehälter mindestens einen Bereich besitzt, der für Neutronen durchlässig ist, wobei dieser Bereich zwischen 25 cm und 75 cm vom Probenort entfernt angeordnet ist, und dass ein Mittel zum Erzeugen eines homogenen Magnetfeldes B₀' ein Spulenpaar (30, 31) im Inneren des Vakuumbehälters ist.

2. Dreiachsenspektrometer nach Anspruch 1, **gekennzeichnet durch** einen zylindrischen Vakuumbehälter mit einem Durchmesser zwischen 50 cm und 150 cm, wobei der für Neutronen durchlässige Bereich im Mantel des Vakuumbehälters angeordnet ist und die Probe mittig in dem Vakuumbehälter positionierbar ist.

3. Dreiachsenspektrometer nach Anspruch 1oder 2,
**dadurch gekennzeichnet,**
**dass** ein Mittel zum Erzeugen eines homogenen Magnetfeldes B₀ ein Spulenpaar (23, 24) ist, wobei die beiden Spulen einen Abstand voneinander haben, der größer ist als die Höhe des Vakuumbehälters.

4. Dreiachsenspektrometer nach einem der Ansprüche 1 bis 3,
**dadurch gekennzeichnet,**
**dass** die Spulenpaare Helmholtzspulenpaare sind.

5. Dreiachsenspektrometer nach einem der Ansprüche 1 bis 4,
**dadurch gekennzeichnet,**
**dass** es Mittel zur Erzeugung eines lokalen Magnetfeldes B₁, B₁' am Probenort umfasst.

6. Dreiachsenspektrometer nach Anspruch 5,
**dadurch gekennzeichnet,**
**dass** stromführende Spulen (25a,b,c) zwischen den Spulen (23, 24) angeordnet sind, welche das lokale Magnetfeld am Probenort R₁ erzeugen

7. Dreiachsenspektrometer nach Anspruch 5 oder 6,
**dadurch gekennzeichnet,**
**dass** die stromführenden Spulen im Inneren des Vakuumbehälters (32a, b, c, 38a, b, c) vorhanden sind, welche das lokale Magnetfeld am Probenort B₁' erzeugen.

8. Dreiachsenspektrometer nach Anspruch 7,
**dadurch gekennzeichnet,**
**dass** die Spulen (32a, b, c, 38a, b, c) von den Spulen im Inneren des Vakuumbehälters (30, 31) umschlossen werden.

9. Dreiachsenspektrometer nach Anspruch 6 bis 8,
**dadurch gekennzeichnet,**
**dass** die stromführenden Spulen zur Erzeugung des lokalen Magnetfeldes B₁, B₁' den Kreisumfang der das homogene Magnetfeld erzeugenden Helmholtzspulen in drei Segmente teilen.

10. Dreiachsenspektrometer nach einem der Ansprüche 6 bis 8,
**dadurch gekennzeichnet,**
**dass** die stromführenden Spulen zur Erzeugung des lokalen Magnetfeldes B₁, B₁' den Kreisumfang der das homogene Magnetfeld B₀, B₀' erzeugenden Spulen in ungleichmäßige Abschnitte unterteilen.

11. Dreiachsenspektrometer nach Anspruch 5,
**dadurch gekennzeichnet,**
**dass** er drei den Vakuumbehälter einschließende stromführende Spulenpaare besitzt, die ein Magnetfeld B₁ erzeugen.

12. Dreiachsenspektrometer nach Anspruch 11,
**dadurch gekennzeichnet,**
**dass** die Symmetrieachsen der stromführenden Spulenpaare die Diagonalen eines trigonalen Antiprismas darstellen.

13. Dreiachsenspektrometer nach einem der Ansprüche 1 bis 12,
**dadurch gekennzeichnet,**
**dass** der Vakuumbehälter wenigstens teilweise aus amagnetischem Material besteht.

14. Dreiachsenspektrometer nach Anspruch 13,
**dadurch gekennzeichnet,**
**dass** das amagnetische Material AlMg 4.5 ist.

15. Dreiachsenspektrometer nach einem der Ansprüche 1 bis 14,
**dadurch gekennzeichnet,**
**dass** der Bereich, der für Neutronen durchlässig, ist einen Winkelbereich von 360° umspannt.

16. Dreiachsenspektrometer nach einem der Ansprüche 1 bis 15,
**dadurch gekennzeichnet,**
**dass** der Bereich, der für Neutronen durchlässig ist, eine maximale Dicke d von 4 mm besitzt.

17. Dreiachsenspektrometer nach Anspruch 16,
**dadurch gekennzeichnet,**
**dass** die Dicke d zwischen 2 und 3 mm liegt.

18. Dreiachsenspektrometer nach einem der Ansprüche 1 bis 17"
**dadurch gekennzeichnet,**
**dass** der Vakuumbehälter, die Spulen (23, 24), die Spulen zur Erzeugung eines lokalen Magnetfeldes B₁ am Probenort oder wenigstens eine Komponente davon gegeneinander verschwenkbar angeordnet sind.

19. Dreiachsenspektrometer nach einem der Ansprüche 1 bis 18,
**dadurch gekennzeichnet,**
**dass** das Neutronenfenster (9) eine Höhe besitzt, die ein Verkippen um 18° erlaubt.

20. Dreiachsenspektrometer nach einem der Ansprüche 1 bis 19,
**dadurch gekennzeichnet,**
**dass** der Vakuumbehälter Mittel zum Verkippen der Mittel zur Erzeugung eines Magnetfeldes B₁ am sich in der Streuebene befindenden Probenort umfasst.

21. Dreiachsenspektrometer nach einem der Ansprüche 1 bis 20,
**dadurch gekennzeichnet,**
**dass** der Vakuumbehälter Mittel (5) zur Befestigung von neutronenoptischen Komponenten, wie Blenden, insbesondere im Innenraum besitzt.

22. Dreiachsenspektrometer nach einem der Ansprüche 1 bis 21,
**dadurch gekennzeichnet,**
**dass** der Vakuumbehälter über auswechselbare Adapterringe (18, 19, 20) verfügt, die den Anbau von Zusatzteilen ermöglichen.

23. Dreiachsenspektrometer nach Anspruch 22,
**dadurch gekennzeichnet,**
**dass** die Zusatzteile mindestens eine Komponente aus der Gruppe bestehend aus einem Ofen, einem Kryostat, einer Druckzelle, einem Mittel zur Veränderung der Probenhöhe in dem Vakuumbehälter ist.

24. Dreiachsenspektrometer nach einem der Ansprüche 1 bis 23,
**dadurch gekennzeichnet,**
**dass** es eine Pumpe umfasst.

25. Dreiachsenspektrometer nach einem der Ansprüche 1 bis 24,
**dadurch gekennzeichnet,**
**dass** es eine Kühlung wenigstens einer Spule umfasst.

26. Dreiachsenspektrometer nach einem der Ansprüche 1 bis 25,
**dadurch gekennzeichnet,**
**dass** der Vakuumbehälter einen Boden (1) und/oder einen Deckel (10) aufweist, der Rippen (2, 17) besitzt.

27. Dreiachsenspektrometer nach einem der Ansprüche 1 bis 26,
**dadurch gekennzeichnet,**
**dass** der Vakuumbehälter mittig mindestens ein Gewicht von 350 kg und an dem Rand von mindestens 100 kg tragen kann, wenn er gleichzeitig in einem Winkelbereich von ± 18° aus der Streuebene gekippt ist.

28. Dreiachsenspektrometer nach einem der Ansprüche 1 bis 27,
**dadurch gekennzeichnet,**
**dass** der Vakuumbehälter über Ösen und Haken (11) für den Transport und/oder für den Aufbau und Abbau verfügt.

29. Verfahren zur Polarisationsanalyse von Proben, bei dem ein polarisierter Neutronenstrahl auf eine Probe gerichtet und von der Probe abgelenkt wird, wobei die Probe in einem Dreiachsenspektrometer in einem Vakuum von mindestens 10³ Pa (10⁻² bar) angeordnet ist und im Probenraum ein im wesentlichen homogenes Magnetfeld erzeugt wird,
**dadurch gekennzeichnet, dass**
• zur Erzeugung des Magnetfelds mindestens ein im Vakuum angeordnetes Spulenpaar (30, 31) gewählt wird und
• der Neutronenstrahlauf dem Weg zur Probe eine Strecke zwischen 25 cm und 75 cm im Vakuum durchläuft.

30. Verfahren nach Anspruch 29,
**dadurch gekennzeichnet,**
**dass** das Vakuum in einem Bereich von 10³ Pa (10⁻² bar) bis 10 Pa (10⁻⁴ bar) liegt.

31. Verfahren nach Anspruch 30,
**dadurch gekennzeichnet,**
**dass** das Vakuum bei 10² Pa (10⁻³ bar) liegt.

32. Verfahren nach einem der Ansprüche 29 bis 31,
**dadurch gekennzeichnet,**
**dass** das Magnetfeld senkrecht zur Durchtrittsebene der Neutronen steht.

33. Verfahren nach einem der Ansprüche 29 bis 32,
**dadurch gekennzeichnet,**
**dass** am Probenort ein weiteres lokales Magnetfeld B₁,B₁' erzeugt wird.

34. Verfahren nach einem der Ansprüche 32 oder 33,
**dadurch gekennzeichnet,**
**dass** ein weiteres Magnetfeld erzeugt wird, welches parallel zu dem senkrecht zur Durchtrittsebene der Neutronen durch die Probe stehenden Magnetfeld verläuft.

35. Verfahren nach einem der Ansprüche 29 bis 34,
**dadurch gekennzeichnet,**
**dass** das im wesentlichen homogene Magnetfeld in einem azimutalen Winkel von bis zu 18° gegenüber der Durchtrittsebene der Neutronen durch die Probe verschwenkt wird.

## Claims

1. A triple-axis spectrometer for the polarization analysis of samples, in which triple-axis spectrometer a polarized neutron beam is directed at the sample and diffracted by the sample, said triple-axis spectrometer having a vacuum chamber, capable of maintaining a vacuum of at least 10³ Pa (10⁻² bar), for receiving a sample and having means for generating a substantially homogeneous magnetic field which extends over the sample chamber,
**characterized in that**
the vacuum chamber has at least one area which is permeable to neutrons, this area being located at a distance of between 25 cm and 75 cm from the sample location, and **in that** a means for generating a homogeneous magnetic field B₀' comprises a pair of coils (30, 31) located inside the vacuum chamber.

2. A triple-axis spectrometer according to Claim 1,
**characterized by**
a cylindrical vacuum chamber with a diameter of between 50 cm and 150 cm, the area which is permeable to neutrons being located in the wall of the vacuum chamber and the sample being positionable in the middle of the vacuum chamber.

3. A triple-axis spectrometer according to Claim 1 or 2,
**characterized in that**
a means for generating a homogeneous magnetic field B₀ comprises a pair of coils (23, 24), the two coils being located at a distance from one another which is greater than the height of the vacuum chamber.

4. A triple-axis spectrometer according to one of Claims 1 to 3,
**characterized in that**
the pairs of coils are pairs of Helmholtz coils.

5. A triple-axis spectrometer according to one of Claims 1 to 4,
**characterized in that**
it includes means for generating a local magnetic field B₁, B₁' at the sample location.

6. A triple-axis spectrometer according to Claim 5,
**characterized in that**
energized coils (25a, b, c) which generate the local magnetic field at sample location B₁ are disposed between the coils (23, 24).

7. A triple-axis spectrometer according to Claim 5 or 6,
**characterized in that**
the energized coils (32a, b, c, 38a, b, c) which generate the local magnetic field at sample location B₁' are located inside the vacuum chamber.

8. A triple-axis spectrometer according to Claim 7,
**characterized in that**
the coils (32a, b, c, 38a, b, c) are enclosed by the coils (30, 31) inside the vacuum chamber.

9. A triple-axis spectrometer according to Claims 6 to 8,
**characterized in that**
the energized coils for generating the local magnetic field B₁, B₁' divide the circumference of the Helmholtz coils which generate the homogeneous magnetic field, into three segments.

10. A triple-axis spectrometer according to one of Claims 6 to 8,
**characterized in that**
the energized coils for generating the local magnetic field B₁, B₁' divide the circumference of the coils which generate the homogeneous magnetic field B₀, B₀', into unequal portions.

11. A triple-axis spectrometer according to Claim 5,
**characterized in that**
it has three pairs of energized coils enclosing the vacuum chamber, which generate a magnetic field B₁.

12. A triple-axis spectrometer according to Claim 11,
**characterized in that**
the axes of symmetry of the pairs of energized coils represent the diagonals of a trigonal antiprism.

13. A triple-axis spectrometer according to one of Claims 1 to 12,
**characterized in that**
the vacuum chamber is made, at least in part, of non-magnetic material.

14. A triple-axis spectrometer according to Claim 13,
**characterized in that**
the non-magnetic material is A1Mg 4.5.

15. A triple-axis spectrometer according to one of Claims 1 to 14,
**characterized in that**
the area which is permeable to neutrons covers an angular range of 360°.

16. A triple-axis spectrometer according to one of Claims 1 to 15,
**characterized in that**
the area which is permeable to neutrons has a maximum thickness d of 4 mm.

17. A triple-axis spectrometer according to Claim 16,
**characterized in that**
the thickness d is between 2 and 3 mm.

18. A triple-axis spectrometer according to one of Claims 1 to 17,
**characterized in that**
the vacuum chamber, the coils (23, 24), the coils for generating a local magnetic field B₁ at the sample location or at least one component thereof are provided in such a way as to be capable of swivelling relative to one another.

19. A triple-axis spectrometer according to one of Claims 1 to 18,
**characterized in that**
the neutron window (9) has a height which allows tilting through 18°.

20. A triple-axis spectrometer according to one of Claims 1 to 19,
**characterized in that**
the vacuum chamber includes a mechanism for tilting the means for generating a magnetic field B₁ at the sample location disposed in the scatter plane.

21. A triple-axis spectrometer according to one of Claims 1 to 20,
**characterized in that**
the vacuum chamber has means (5) for fixing neutron optical components, such as shields, particularly in the interior space.

22. A triple-axis spectrometer according to one of Claims 1 to 21,
**characterized in that**
the vacuum chamber is provided with exchangeable adapter rings (18, 19, 20), which facilitate the attachment of additional parts.

23. A triple-axis spectrometer according to Claim 22,
**characterized in that**
the additional parts comprise at least one component from the group consisting of a furnace, a cryostat, a pressure cell and a means for altering the height of the sample in the vacuum chamber.

24. A triple-axis spectrometer according to one of Claims 1 to 23,
**characterized in that**
it includes a pump.

25. A triple-axis spectrometer according to one of Claims 1 to 24,
**characterized in that**
it includes a cooling system for at least one coil.

26. A triple-axis spectrometer according to one of Claims 1 to 25,
**characterized in that**
the vacuum chamber has a base (1) and/or a cover (10) having ribs (2, 17).

27. A triple-axis spectrometer according to one of Claims 1 to 26,
**characterized in that**
the vacuum chamber can carry at least a weight of 350 kg in the middle and at least 100 kg at the edge, when it is simultaneously tilted in an angular range of ±18° from the scatter plane.

28. A triple-axis spectrometer according to one of Claims 1 to 27,
**characterized in that**
the vacuum chamber is provided with eyes and hooks (11) for transportation and/or for assembly and dismantling.

29. Method for the polarization analysis of samples, in which a polarized neutron beam is directed at a sample and diffracted by the sample, the sample being placed in a triple-axis spectrometer in a vacuum of at least 10³ Pa (10⁻² bar) and a substantially homogeneous magnetic field being generated in the sample chamber,
**characterized in that**
■ for generating the magnetic field, at least one pair of coils (30, 31) located in the vacuum is selected and
■ the neutron beam traverses a distance of between 25 cm and 75 cm in the vacuum on its way to the sample.

30. Method according to Claim 29,
**characterized in that**
the vacuum is in a range of 10³ Pa (10⁻² bar) to 10 Pa (10⁻⁴ bar).

31. Method according to Claim 30,
**characterized in that**
the vacuum is about 10² Pa (10⁻³ bar).

32. Method according to one of Claims 29 to 31,
**characterized in that**
the magnetic field is perpendicular to the plane of passage of the neutrons.

33. Method according to one of Claims 29 to 32,
**characterized in that**
a further local magnetic field B₁, B₁' is generated at the sample location.

34. Method according to one of Claims 32 or 33,
**characterized in that**
a further magnetic field is generated which runs parallel to the magnetic field that extends perpendicular to the plane of passage of the neutrons through the sample.

35. Method according to one of Claims 29 to 34,
**characterized in that**
the substantially homogeneous magnetic field is swivelled at an azimuthal angle of up to 18° relative to the plane of passage of the neutrons through the sample.

## Revendications

1. Spectromètre à trois axes pour l'analyse de polarisation d'échantillons, dans lequel spectromètre à trois axes un faisceau de neutrons polarisé est dirigé sur l'échantillon et dévié par celui-ci, ledit spectromètre à trois axes étant équipé d'un récipient sous vide, capable de maintenir un vide d'au moins 10³ Pa (10⁻² bars), pour recevoir un échantillon ainsi que de moyens permettant de générer un champ magnétique sensiblement homogène qui s'étend dans la chambre de l'échantillon,
**caractérisé en ce**
**que** le récipient sous vide possède au moins une zone qui est perméable aux neutrons, ladite zone étant agencée à une distance comprise entre 25 cm et 75 cm de l'emplacement de l'échantillon, et en ce que les moyens permettant de générer un champ magnétique homogène B₀' sont une paire de bobines (30, 31) à l'intérieur du récipient sous vide.

2. Spectromètre à trois axes selon la revendication 1, **caractérisé par** un récipient sous vide cylindrique de diamètre compris entre 50 cm et 150 cm, la zone perméable aux neutrons étant agencée dans l'enveloppe du récipient sous vide et l'échantillon pouvant être positionné au centre du récipient sous vide.

3. Spectromètre à trois axes selon la revendication 1 ou la revendication 2,
**caractérisé en ce**
**qu'**un moyen permettant de générer un champ magnétique homogène B₀ est une paire de bobines (23, 24), les deux bobines étant séparées d'une distance supérieure à la hauteur du récipient sous vide.

4. Spectromètre à trois axes selon l'une des revendications 1 à 3,
**caractérisé en ce**
**que** les paires de bobines sont des paires de bobines de Helmholtz.

5. Spectromètre à trois axes selon l'une des revendications 1 à 4,
**caractérisé en ce**
**qu'**il comprend des moyens permettant de générer un champ magnétique local B₁, B₁' à l'emplacement de l'échantillon.

6. Spectromètre à trois axes selon la revendication 5,
**caractérisé en ce**
**que** des bobines parcourues par le courant (25a, b, c) qui génèrent le champ magnétique local à l'emplacement de l'échantillon B₁ sont disposées entre les bobines (23, 24).

7. Spectromètre à trois axes selon la revendication 5 ou la revendication 6,
**caractérisé en ce**
**que** les bobines parcourues par le courant qui génèrent le champ magnétique local à l'emplacement de l'échantillon B₁' sont présentes à l'intérieur du récipient sous vide (32a, b, c, 38a, b, c).

8. Spectromètre à trois axes selon la revendication 7,
**caractérisé en ce**
**que** les bobines (32a, b, c, 38a, b, c) sont entourées par les bobines (30, 31) à l'intérieur du récipient sous vide.

9. Spectromètre à trois axes selon les revendications 6 à 8,
**caractérisé en ce**
**que** les bobines parcourues par le courant servant à générer le champ magnétique local B₁, B₁' partagent la circonférence des bobines de Helmholtz générant le champ magnétique homogène en trois segments.

10. Spectromètre à trois axes selon l'une des revendications 6 à 8,
**caractérisé en ce**
**que** les bobines parcourues par le courant servant à générer le champ magnétique local B₁, B₁' partagent la circonférence des bobines générant le champ magnétique homogène B₀, B₀' en segments irréguliers.

11. Spectromètre à trois axes selon la revendication 5,
**caractérisé en ce**
**qu'**il possède trois paires de bobines parcourues par le courant qui génèrent un champ magnétique B₁ et qui entourent le récipient sous vide.

12. Spectromètre à trois axes selon la revendication 11,
**caractérisé en ce**
**que** les axes de symétrie des paires de bobines parcourues par le courant sont les diagonales d'un antiprisme trigonal.

13. Spectromètre à trois axes selon l'une des revendications 1 à 12,
**caractérisé en ce**
**que** le récipient sous vide est constitué au moins en partie d'un matériau amagnétique.

14. Spectromètre à trois axes selon la revendication 13,
**caractérisé en ce**
**que** le matériau amagnétique est de l'AlMg 4.5.

15. Spectromètre à trois axes selon l'une des revendications 1 à 14,
**caractérisé en ce**
**que** la zone perméable aux neutrons s'étend sur une plage angulaire de 360°.

16. Spectromètre à trois axes selon l'une des revendications 1 à 15,
**caractérisé en ce**
**que** la zone perméable aux neutrons a une épaisseur maximale d de 4 mm.

17. Spectromètre à trois axes selon la revendication 16,
**caractérisé en ce**
**que** l'épaisseur d se situe dans la plage de 2 à 3 mm.

18. Spectromètre à trois axes selon l'une des revendications 1 à 17,
**caractérisé en ce**
**que** le récipient sous vide, les bobines (23, 24), les bobines servant à générer un champ magnétique local B₁ ou au moins une composante de celui-ci à l'emplacement de l'échantillon sont disposés de façon à pouvoir pivoter les uns par rapport aux autres.

19. Spectromètre à trois axes selon l'une des revendications 1 à 18,
**caractérisé en ce**
**que** la fenêtre des neutrons (9) possède une hauteur qui permet un décalage angulaire de 18°.

20. Spectromètre à trois axes selon l'une des revendications 1 à 19,
**caractérisé en ce**
**que** le récipient sous vide comprend des moyens permettant un décalage angulaire des moyens servant à générer un champ magnétique B₁ à l'emplacement de l'échantillon qui se trouve dans le plan de dispersion.

21. Spectromètre à trois axes selon l'une des revendications 1 à 20,
**caractérisé en ce**
**que** le récipient sous vide possède des moyens (5) pour la fixation de composants optiques neutroniques tels que des filtres, en particulier dans l'espace intérieur.

22. Spectromètre à trois axes selon l'une des revendications 1 à 21,
**caractérisé en ce**
**que** le récipient sous vide est équipé de bagues d'adaptation interchangeables (18, 19, 20) qui permettent de monter des éléments additionnels.

23. Spectromètre à trois axes selon la revendication 22,
**caractérisé en ce**
**que** les éléments additionnels sont au moins un composant choisi dans le groupe constitué par un four, un cryostat, une cellule de pression, un moyen pour faire varier la hauteur de l'échantillon dans le récipient sous vide.

24. Spectromètre à trois axes selon l'une des revendications 1 à 23,
**caractérisé en ce**
**qu'**il comprend une pompe.

25. Spectromètre à trois axes selon l'une des revendications 1 à 24,
**caractérisé en ce**
**qu'**il comprend un refroidissement d'au moins une bobine.

26. Spectromètre à trois axes selon l'une des revendications 1 à 25,
**caractérisé en ce**
**que** le récipient sous vide présente un fond (1) et/ou un couvercle (10) qui possède des nervures (2, 17).

27. Spectromètre à trois axes selon l'une des revendications 1 à 26,
**caractérisé en ce**
**que** le récipient sous vide peut porter un poids d'au moins 350 kg au milieu et d'au moins 100 kg à la périphérie lorsqu'il est en même temps décalé d'un angle dans la plage de ± 18° par rapport au plan de dispersion.

28. Spectromètre à trois axes selon l'une des revendications 1 à 27,
**caractérisé en ce**
**que** le récipient sous vide est muni d'oeillets et de crochets (11) pour le transport et/ou pour le montage et le démontage.

29. Procédé d'analyse d'échantillons par polarisation, dans lequel un faisceau de neutrons polarisé est dirigé sur un échantillon et dévié par l'échantillon, ledit échantillon étant placé dans un spectromètre à trois axes sous un vide d'au moins 10³ Pa (10⁻² bars) et un champ magnétique sensiblement homogène est généré dans la chambre de l'échantillon, **caractérisé en ce que**
• au moins une paire de bobines (30, 31) placées sous vide est choisie pour générer le champ magnétique, et
• le faisceau de neutrons parcourt une distance allant de 25 cm à 75 cm dans le vide pour arriver à l'échantillon.

30. Procédé selon la revendication 29,
**caractérisé en ce**
**que** le vide se situe dans une plage allant de 10³ Pa (10⁻² bars) à 10 Pa (10⁻⁴ bars).

31. Procédé selon la revendication 30,
**caractérisé en ce**
**que** le vide est d'environ 10² Pa (10⁻³ bars).

32. Procédé selon l'une des revendications 29 à 31,
**caractérisé en ce**
**que** le champ magnétique est perpendiculaire au plan de pénétration des neutrons.

33. Procédé selon l'une des revendications 29 à 32,
**caractérisé en ce**
**qu'**un autre champ magnétique local B₁, B₁' est généré à l'emplacement de l'échantillon.

34. Procédé selon l'une des revendications 32 ou 33,
**caractérisé en ce**
**qu'**un autre champ magnétique qui s'étend parallèlement au champ magnétique perpendiculaire au plan de pénétration des neutrons dans l'échantillon est généré.

35. Procédé selon l'une des revendications 29 à 34,
**caractérisé en ce**
**que** le champ magnétique sensiblement homogène pivote selon un angle azimutal allant jusqu'à 18° par rapport au plan de pénétration des neutrons dans l'échantillon.
